# EUROPÄISCHE PATENTSCHRIFT

(11) **EP 1 257 437 B1**
(45) Veröffentlichungstag und Bekanntmachung des Hinweises auf die Patenterteilung: **02.11.2006**
(21) Anmeldenummer: 01911437.0
(22) Anmeldetag: 09.02.2001
(51) Int. Cl.: B60R 16/02

(54) **SYSTEM ZUM ABRUFEN VON INFORMATIONEN ZUR FUNKTION UND BEDIENUNG VERSCHIEDENER EINRICHTUNGEN EINES KRAFTFAHRZEUGS**
SYSTEM FOR RETRIEVING INFORMATION REGARDING THE FUNCTION AND THE OPERATION OF DIFFERENT EQUIPMENT OF A MOTOR VEHICLE
SYSTEME DE RECHERCHE D'INFORMATIONS RELATIVES AU FONCTIONNEMENT ET A L'ETAT DE SERVICE DE DIFFERENTS DISPOSITIFS SUR UN VEHICULE

(30) Priorität: 12.02.2000 DE 10006351
(43) Veröffentlichungstag der Anmeldung: 20.11.2002
(73) Patentinhaber: ROBERT BOSCH GMBH, 70442 Stuttgart (DE)
(72) Erfinder: FEUCHTER, Uwe, 70563 Stuttgart (DE); KYTOELAE, Timo, 02630 Espoo (FI); MUENICH, Andreas, 71229 Leonberg (DE); NGUYEN, Phu-Hung, 65760 Eschborn (DE); MATHONY, Hans-Joerg, 71732 Tamm-Hohenstange (DE)
(86) Internationale Anmeldenummer: PCT/DE2001/000516
(87) Internationale Veröffentlichungsnummer: WO 2001/058724

(56) Entgegenhaltungen:
- EP-A- 0 701 926
- EP-A- 0 771 686
- EP-A- 1 123 842
- WO-A-99/57648
- WO-A1-97/13657
- DE-A- 3 346 370
- DE-A- 3 737 087
- DE-A- 4 033 574
- DE-C- 3 514 438
- DE-U- 9 301 031
- US-A- 5 017 916
- US-A- 5 635 925
- "Le multimédia va bouleverser l'architecture électronique du véhicule et faire entrer l'automobile dans l'ère des services" INGENIEURS DE L'AUTOMOBILE, April 1999 (1999-04), Seiten 42-48, FR

## Beschreibung

### Stand der Technik

Die Erfindung betrifft ein System zum Abrufen von Informationen zur Funktion und Bedienung verschiedener Einrichtungen eines Kraftfahrzeugs, wobei das Kraftfahrzeug mit mindestens einem Fahrzeugbus ausgestattet ist, an den verschiedene Komponeneten der Fahrzeugelektronik angeschlossen sind, mit einer Informationsbasis, in der Informationen zur Funktion und Bedienung verschiedener Einrichtungen des Kraftfahrzeugs abgespeichert sind, mit einem an die Informationsbasis angeschlossenen Mikrorechner, mit Eingabemitteln zum Abrufen von Informationen von der Informationsbasis und mit Ausgabemitteln zur Wiedergabe der abgerufenen Informationen.

Kraftfahrzeuge werden in der Regel mit einem in gedruckter Form vorliegenden Bedienungshandbuch ausgeliefert, in dem die Funktionsweise der verschiedenen Einrichtungen des Kraftfahrzeugs beschrieben wird und Bedienungsanleitungen für die vom Fahrer zu bedienenden Einrichtungen gegeben werden. Außerdem finden sich in Bedienungshandbüchern regelmäßig Hinweise zu Kontroll- und Wamfunktionen einzelner Einrichtungen sowie Anleitungen zur Selbsthilfe im Falle einfacherer Defekte. Zum Auffinden der jeweils benötigten Informationen stehen dem Leser entweder ein Inhaltsverzeichnis oder ein Schlagwortregister zur Verfügung. Dies erweist sich in der Praxis oftmals als unzureichend, nämlich insbesondere dann, wenn Schwierigkeiten bei der Bedienung einer oder mehrerer Einrichtungen des Kraftfahrzeugs auftauchen, die sich nicht ohne weiteres einer bestimmten Fahrzeugkomponente oder einem Schlagwort zuordnen lassen. In diesem Falle ist der Leser häufig gezwungen, größere Passagen des Bedienungshandbuchs zu lesen, um auf die benötigte Information zu stoßen und diese als solche zu erkennen. In der Praxis ist es außerdem oftmals erforderlich, Änderungen und/oder Ergänzungen im Bedienungshandbuch vorzunehmen, was bei einem in gedruckter Form vorliegenden Handbuch nur durch Austausch des gesamten Handbuchs oder durch Aufnahme von Ergänzungsdokumentation möglich ist. Diese muss dann, genauso wie das Handbuch selbst, stets im Kraftfahrzeug mitgeführt werden.

Als Fortbildung eines in gedruckter Form vorliegenden Bedienungshandbuchs werden in zunehmendem Masse auch auf elektronischen Datenträgern, insbesondere auf CDs, abgespeicherte Bedienungshandbücher verwendet, die beispielsweise mit Hilfe eines PCs gelesen werden können. Bei derartig abgespeicherten Bedienungshandbüchern können neben dem Inhaltsverzeichnis und einem Schlagwortregister auch andere Suchstrategien zum Auffinden von bestimmten Informationen zur Funktionsweise und Bedienung von einzelnen Fahrzeugkomponenten verwendet werden. Beispielhaft seien hier die Volltextrecherche oder auch die interaktive Abfrage von Informationen genannt. Diese Art von Bedienhandbuch bzw. der zum Lesen erforderliche PC kann zwar fest im Fahrzeug installiert sein, die Auswahl und der Zugriff auf die abgespeicherten Bedieninformationen erfolgt aber ausschließlich durch den Benutzer und wird nicht durch die Fahrzeugfunktionen unterstützt.

Die DE 33 46 370 A1 zeigt ein Informationssystem nach dem Oberbegriff des Anspruchs 1, das nach einem Verfahren zur Anzeige von Informationen in einem Kraftfahrzeug arbeitet. Sowohl Messwerte im Kraftfahrzeug, als auch Betriebsdaten, Fahrdaten und Verkehrsinformationen können optisch und akustisch angezeigt werden. Zu diesem Zweck sind sämtliche Informationen in Blöcke gegliedert, die durch mehrmaliges Betätigen einer Umschalttaste in entsprechender Folge über die Anzeigevorrichtung ausgegeben werden. Ein Mikrocomputer ist mit der Anzeige und mit Messwertgebern im Fahrzeug verbunden. Unabhängig von den abgerufenen Informationen werden durch ein entsprechendes Programm des Mikrocomputers bei einem Auftreten kritischer Messwerte diese unverzüglich über die Anzeige ausgegeben.

So kann z.B. der Hinweis "Tank leer" dem Fahrer signalisieren, dass der Kraftstoffvorrat zu Ende geht.

Aus der Zeitschrift "Ingenieur de l'automobil", April 1999, Seite 42 ff., ist ein Multimediasystem für ein Fahrzeug bekannt, bei dem Unterhaltungssysteme, Informationssysteme und ein Navigationssystem im Fahrzeug miteinander verbunden angeordnet sind. So ist z.B. eine Funktion der Reichweite des Fahrzeugs mit dem vorhandenen Spritvorrat gezeigt. Verschiedene Tankstellen können zur Auswahl angezeigt werden. Der Fahrer wird z.B. über eine freie Spur der Tankstelle informiert.

Mit der vorliegenden Erfindung soll der Zugriff auf Informationen zur Funktion und Bedienung verschiedener Einrichtungen eines Kraftfahrzeugs vereinfacht werden, so dass derartige Informationen beispielsweise auch während der Fahrt abgerufen werden können.

Eine solche Vereinfachung wird mit einem System nach Anspruch 1 erreicht.

### Vorteile der Erfindung

Hierbei ist ein Mikrorechner an einen Fahrzeugbus angeschlossen und so programmiert, dass der Informationsbedarf des Benutzers durch Auswertung der von den einzelnen Komponenten der Fahrzeugelektronik an den Fahrzeugbus gelieferten Daten ermittelt wird und entsprechende Informationen automatisch von einer an den Mikrorechner angeschlossenen Informationsbasis abgerufen und wiedergegeben werden. An einem Fahrzeugbus, an den verschiedene Komponenten der Fahrzeugelektronik angeschlossen sind, liegen grundsätzlich eine Vielzahl von Daten über den aktuellen Zustand verschiedener Einrichtungen und Komponenten des Kraftfahrzeugs vor. Beispielsweise sind einige Komponenten der Fahrzeugelektronik mit Überwachungsfunktionen ausgestattet, wie z. B. das Auto-Check-System, oder verfügen über eine gewisse Diagnosefähigkeit. Durch die zunehmende Vernetzung bzw. das "Zusammenwachsen" der im Kraftfahrzeug verfügbaren Geräte, wie z. B. Radiophon, Infotainment-Geräte und Bordcomputer, wird die Erfassung von derartigen Zustandsdaten zusätzlich unterstützt. Davon ausgehend wird vorgeschlagen, eine Online-Hilfe für den Benutzer zu realisieren, die automatisch, durch Auswertung der verfügbaren Zustandsdaten den Informationsbedarf des Benutzers ermittelt und dementsprechend gezielt Informationen von der Informationsbasis abruft. Das System führt also immer zunächst eine Zustandsanalyse bzw. eine Fehlerdiagnose durch, bevor sie den Benutzer gezielt mit Informationen zur Funktionsweise bzw. Bedienung einzelner Einrichtungen des Kraftfahrzeugs versorgt. Als besonders vorteilhaft in diesem Zusammenhang erweist es sich, dass das System auch auf Zustände bzw. Fehler reagiert, die für den Benutzer nicht direkt erkennbar sind.

Das erfindungsgemäße System stellt also einen "aktiven" Hilfeassistenten dar, der automatisch erkennt, dass der Fahrzeugbenutzter Bedieninformationen benötigt und den Fahrzeugbenutzer dann durch eine "intelligente" Ausgabe von Informationen bei der Bedienung des Kraftfahrzeugs unterstützt.

Es gibt nun verschiedene Möglichkeiten, das erfindungsgemäße System und insbesondere einzelne Komponenten davon in vorteilhafter Weise auszugestalten und weiterzubilden.

Als vorteilhaft erweist es sich, wenn das erfindungsgemäße System und insbesondere der Mikrorechner des erfindungsgemäßen Systems wahlweise aktivierbar ist, damit der Fahrzeugbenutzer auch die Möglichkeit hat, die Wiedergabe von Informationen zu unterdrücken. Die Aktivierung kann beispielsweise über eine Tastatur, also durch Tastendruck, erfolgen oder auch durch eine Spracheingabe, wozu die Eingabemittel der erfindungsgemäßen Vorrichtung über ein Mikrofon und Mittel zur Sprachsignalauswertung verfügen sollten.

Des weiteren erweist es sich als vorteilhaft, verschiedene Mittel zur Wiedergabe der abgerufenen Informationen vorzusehen, um diese "artgerecht" wiedergeben zu können. So bietet sich beispielsweise für Informationen mit Warnfunktion die akustische Wiedergabe an, da z.B. akustische Warnsignale in jeder Situation, also auch während der Fahrt, wahrgenommen werden können, ohne den Fahrer übermäßig vom Verkehrsgeschehen abzulenken. Bei komplizierteren Bedieninformationen, wie z. B. bei Informationen zur Initialisierung des Radios, empfiehlt sich eine visuelle, wie z. B. textuelle oder grafische Wiedergabe, der Informationen.

Da die einzelnen Komponenten eines Kraftfahrzeugs oftmals nicht isoliert betrachtet werden können, sondern deren Funktionsweise in der Regel immer im Zusammenhang mit der Funktionsweise weiterer Komponenten gesehen werden muß, erweist es sich als sinnvoll, wenn in der Informationsbasis zusammen mit einzelnen Informationen zur Funktion oder Bedienung einzelner Einrichtungen im Kraftfahrzeug auch Querverweise auf weitere in der Informationsbasis abgespeicherte Informationen abgespeichert sind. Dies ermöglicht dann auch eine interaktive Informationsabfrage.

Die Verbindung zwischen dem Mikrorechner und der Informationsbasis kann entweder dauerhaft sein, z. B. auf der Basis einer Paketvermittlung über SMS oder Ähnliches, oder lediglich nach Bedarf aufgebaut werden, z. B. auf der Grundlage von GSM-dial-up-Verbindungen.

Besonders vorteilhaft ist es, wenn die Informationsbasis auch immer wieder auf den neuesten Stand gebracht werden kann. Hierfür könnte in einer vorteilhaften Ausgestaltung der erfindungsgemäßen Vorrichtung ein eigener Kommunikationskanal, beispielsweise ein Mobilfunkkanal, zwischen der Informationsbasis und einer beispielsweise beim Kfz-Hersteller eingerichteten externen Informationsbasis vorgesehen sein. Durch entsprechende Datenübertragung über diesen Kommunikationskanal könnte die Informationsbasis des erfindungsgemäßen Systems dann aktualisiert oder auch erweitert werden.

In schwierigen Fällen kann es vorkommen, dass die in der Informationsbasis abgespeicherten Informationen nicht ausreichen, um das bei der Bedienung des Kraftfahrzeugs aufgetretene Problem zu beheben. In diesen Fällen erweist es sich als vorteilhaft, wenn in der Informationsbasis zusammen mit einzelnen Informationen zur Funktion und Bedienung bestimmter Einrichtungen des Kraftfahrzeugs auch Verweise auf außerhalb des Fahrzeugs verfügbare Informationen abgespeichert sind, wie z. B. Informationen, die auf einer beim Kfz-Hersteller vorhandenen externen Informationsbasis vorliegen. Besonders vorteilhaft in diesem Zusammenhang ist es, wenn der Mikrorechner an eine derartige externe Informationsbasis angekoppelt ist und so programmiert ist, dass er automatisch eine Verbindung zu der externen Informationsbasis herstellt, wenn ein entsprechender Verweis in der Informationsbasis aufgerufen worden ist, und zusätzliche Informationen von der externen Informationsbasis abruft. In der Informationsbasis können aber auch Verweise auf außerhalb des Fahrzeugs verfügbare Informationen abgespeichert sein, die über eine Telefon-Hotline abgefragt werden können. In diesem Falle ist es besonders vorteilhaft, wenn der Mikrorechner so programmiert ist, dass er automatisch eine Verbindung zu der Telefon-Hotline herstellt, wenn ein entsprechender Verweis in der Informationsbasis aufgerufen worden ist. Die Telefon-Hotline könnte dann auch dazu genutzt werden, vorab fahrzeugspezifische Daten an die Auskunftsstelle zu übertragen, so dass diese dem Fahrer dann gezielt, individuelle Bedieninformationen zu seinem ganz speziellen Problem liefern kann.

Schließlich sei noch erwähnt, dass der Mikrorechner auch mit weiteren Infotainment-Geräten im Kraftfahrzeug kommunizieren könnte, beispielsweise mit einem Navigationssystem. Neben Funktions- und Bedieninformationen könnte die erfindungsgemäße Vorrichtung dann auch Navigationsinformationen ausgeben, beispielsweise im Falle des Defekts einer wesentlichen Fahrzeugkomponente, der möglichst unverzüglich behoben werden muß. Das Navigationssystem könnte in diesem Fall Informationen über die nächste Haltemöglichkeit oder die nächstgelegene Werkstatt liefern.

### Zeichnung

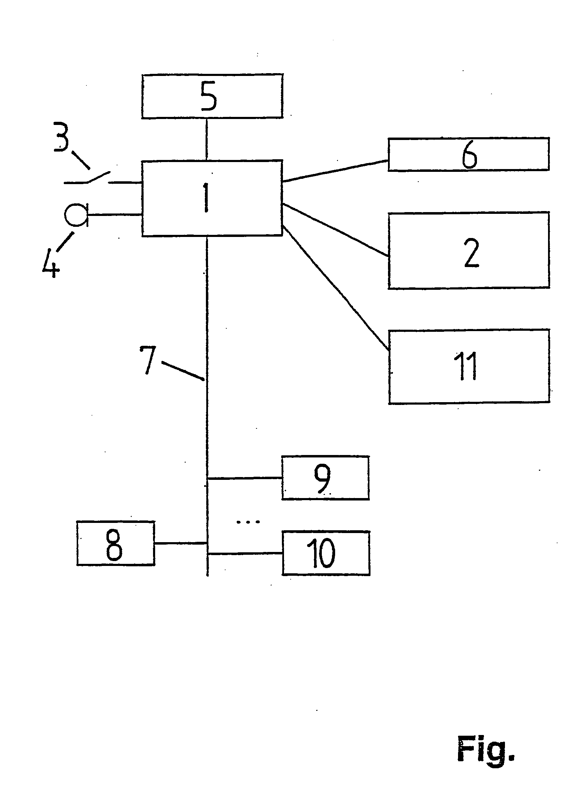

Die einzige Figur zeigt das Blockschaltbild eines erfindungsgemäßen Systems zum Abrufen von Informationen zur Funktion und Bedienung verschiedener Einrichtungen eines Kraftfahrzeugs.

### Beschreibung eines Ausführungsbeispiels

Das in der einzigen Figur dargestellte, erfindungsgemäße System ist in einem Kraftfahrzeug eingebaut, das mit einem Fahrzeugbus 7 ausgestattet ist, an den verschiedene Komponenten 8 bis 10 der Fahrzeugelektronik angeschlossen sind. Dieses System umfasst einen Mikrorechner 1, der an eine Informationsbasis 2 angeschlossen ist. In der Informationsbasis 2 sind Informationen zur Funktion und Bedienung verschiedener Einrichtungen des Kraftfahrzeugs abgespeichert. An den Mikrorechner 1 außerdem angeschlossen sind verschiedene Eingabemittel 3 und 4, die zum Abrufen bestimmter Funktions- und Bedieninformationen von der Informationsbasis 2 dienen. Außerdem sind noch verschiedene Ausgabemittel 5 und 6 zur Wiedergabe der abgerufenen Informationen an den Mikrorechner 1 angeschlossen.

Erfindungsgemäß ist auch der Mikrorechner 1 an den Fahrzeugbus 7 angeschlossen. Außerdem ist der Mikrorechner 1 so programmiert, dass der Informationsbedarf des Benutzers des Kraftfahrzeugs durch Auswertung der von den einzelnen Komponenten 8 bis 10 der Fahrzeugelektronik an den Fahrzeugbus 7 gelieferten Daten ermittelt wird und entsprechende Informationen automatisch von der Informationsbasis 2 abgerufen und wiedergegeben werden.

Im hier dargestellten Ausführungsbeispiel umfassen die Eingabemittel einen Taster 3 und eine Spracheingabe 4 mit Mikrofon und Mitteln zur Sprachsignalauswertung. Die Aktivierung der Vorrichtung bzw. des Mikrorechners 1 erfolgt hier entweder durch Tastendruck des Benutzers oder durch Spracheingabe der gegebenenfalls ein Tastendruck vorangegangen ist. Bedient der Benutzer anschließend, gleichzeitig oder kurz vorher eine bestimmte Fahrzeugkomponente, wie z. B. die Sitzverstellung, so erkennt der Mikrorechner 1 durch Auswertung der Daten, die aufgrund der Bedienung der Fahrzeugkomponente am Fahrzugbus 7 anliegen, dass der Benutzer Hilfe bzw. Informationen zu diesem Thema benötigt. Der Mikrorechner 1 ruft dann automatisch entsprechende Informationen von der Informationsbasis 2 ab, so dass sie für den Benutzer wiedergegeben werden können.

Das Abrufen und Wiedergeben von Informationen durch die erfindungsgemäße Vorrichtung könnte auch automatisch initiiert werden, nachdem die Statusinformationen der einzelnen an den Fahrzeugbus 7 angeschlossenen Komponenten 8 bis 10 der Fahrzeugelektronik ausgewertet worden sind und dabei ein Informationsbedarf des Benutzers erkannt worden ist. So kann beispielsweise erkannt werden, dass der Fahrzeugbenutzer Bedienelemente in einer Art oder Reihenfolge benutzt, die keine sinnvolle Reaktion der zugehörigen Einrichtung bewirken. In der Praxis kann dies der Fall sein, wenn der Fahrer mehrfach innerhalb kurzer Zeit eine Funktion aktiviert und gleich wieder deaktiviert hat. In einem anderen Fall könnte derselbe Fahrer bei aufeinderfolgenden Fahrten den Sitz und/oder die Außenspiegel unterschiedlich eingestellt haben. In Verbindung mit einer Merkfunktion für diese Einstellungen könnte erkannt werden, dass es sich um denselben Fahrer handelt. Bei der Initialisierung des Autoradios könnte erkannt werden, dass der Fahrer die Bedienelemente nicht in der vorgeschriebenen Reihenfolge betätigt.

Wie bereits erwähnt, erkennt das erfindungsgemäße System von sich aus, dass der Benutzer Informationen benötigt und welchen Themenbereich diese Informationen betreffen. Dazu hört der Mikrorechner 1 die auf dem Fahrzeugbus 7 verfügbaren Statusinformationen der an den Fahrzeugbus angeschlossenen Komponenten 8 bis 10 der Fahrzeugeletronik mit. Diese Komponenten 8 bis 10 könnten auch eigens für die erfindungsgemäße Vorrichtung Statusinformationen erheben und auf den Fahrzeugbus 7 stellen.

Mit Hilfe des erfindungsgemäßen Systems können aber nicht nur Funktions- und Bedieninformationen on-line zur Verfügung gestellt werden sondern auch Hilfen bei etwaig auftretenden Fehlern oder Defekten einer diagnosefähigen Fahrzeugkomponente, sofern diese Fehler oder Defekte an den Fahrzeugbus übermittelt werden. Dazu könnte das erfindungsgemäße System den Fahrer über den aufgetretenen Defekt informieren und auf die möglichen Ursachen dieses Defekts hinweisen. Außerdem könnte das erfindungsgemäße System dem Fahrer Informationen zum Beheben des Defekts zur Verfügung stellen.

Das in der einzigen Figur dargestellte erfindungsgemäße System umfasst sowohl ein Display 5 zur visuellen, insbesondere textuellen oder grafischen, Wiedergabe von Informationen als auch eine Sprachausgabe 6 zur akustischen Wiedergabe von Bedieninformationen.

In der Informationsbasis 2 des erfindungsgemäßen Systems sind nicht nur einzelne Funktions- und Bedieninformationen abgespeichert sondern mit diesen auch Querverweise zu weiterführenden, in der Informationsbasis abgespeicherten Informationen, so dass sich in bestimmten Fällen auch interaktive, schrittweise Hilfe realisieren läßt.

Außerdem können in einer vorteilhaften Variante des erfindungsgemäßen Systems auch Abfolgen von Bedienschritten mitprotokolliert werden, die der Fahrzeugbenutzer beispielsweise bei anspruchsvollen, erfolgreich durchgeführten Initialisierungsvorgängen ausgeführt hat. Soll ein solcher Initialisierungsvorgang, beispielsweise beim Einrichten des Fahrerplatzes, beim Programmieren der Kurzwahltasten und bei der Konfigurierung des Radios oder auch bei der Initialisierung der Hochlaufautomatik der Fensterheber, wiederholt werden, so kann die erfindungsgemäße Vorrichtung aufgrund des einmal erstellten Protokolls bei Bedarf Hilfestellung leisten.

Die Informationsbasis 2 ist jederzeit über einen hier nicht näher dargestellten Kommunikationskanal, beispielsweise per Mobilfunk, aktualisierbar. Dabei können die abgespeicherten Informationen auch mit Verweisen auf weiterführende Informationen versehen werden, die außerhalb des Kraftfahrzeugs, beispielsweise beim Kfz-Hersteller vorliegen. Dieser könnte eine externe Informationsbasis unterhalten, zu der der Mikrorechner 1 des erfindungsgemäßen Systems wahlweise eine Verbindung aufbauen könnte.

In bestimmten Fällen kann das hier dargestellte erfindungsgemäße System auch eine Verbindung zu einer Telefon-Hotline 11 aufbauen, über die der Fahrer dann eine persönliche Beratung erhalten kann. Beim Aufbauen der Verbindung kann der Mikrorechner 1 bereits Informationen über das Fahrzeug, z. B. die Fahrzeugidentifikation und auch Statusinformationen, über die Telefon-Hotline 11 an die angeschlossene Auskunftsstelle übermitteln, so dass das aufgetretene Problem bereits vorab, z. B. computerunterstützt, analysiert werden kann. Das Personal der Auskunftsstelle ist dann schon vor dem eigentlichen Telefongespräch mit dem Benutzer über das aufgetretene Problem zumindest teilweise informiert und kann entsprechende Informationen heraussuchen oder entscheiden, bei schwierigeren Fragestellungen erst später zurückzurufen. So können Verbindungskosten eingespart werden.

Die Funktionsweise des erfindungsgemäßen System wird nachfolgend nochmals anhand mehrerer Beispiele erläutert.

Die Glühbirne vom Bremslicht hinten rechts brennt durch. Der Defekt der Birne wird von der Lampenüberwachung erkannt. Die Lampenüberwachung initiiert mit Hilfe der erfindungsgemäßen Vorrichtung eine on-line-Hilfe, die den Fahrer über den Ausfall der Lampe informiert. Zusätzlich bietet das erfindungsgemäße System dem Fahrer an, ihn mit Hilfe des etwaig vorhandenen Navigationssystems zur nächst möglichen Stelle zu lotsen, wo er die Glühbirne gefahrlos auswechseln kann. Außerdem wird dem Fahrer textuell, grafisch und auch akustisch das Vorgehen beim Birnenwechsel erläutert.

Der Generator ist defekt. Das erfindungsgemäße System informiert den Fahrer über den aufgetretenen Defekt, wobei neben einer Beschreibung des Fehlers auch die möglichen Ursachen erläutert werden. Außerdem wird der Fahrer mit Hilfe des Navigationssystems zur nächst möglichen Stelle gelotst, wo er gefahrlos anhalten kann. Als weitere Hilfeleistungen sind denkbar: Notruf an eine Hilfsorganisation, z. B. den ADAC, Angabe der Mitgliedsnummer, Angabe der fahrzeugspezifischen Daten, Angaben über den Standort des Fahrzeugs, Angaben über den Defekt und gegebenenfalls Hinweise an den Fahrer über wichtige Termine, damit der Fahrer Termine eventuell absagen oder verschieben kann.

Das erfindungsgemäße System erkennt auch, wenn der Fahrer eine momentan nicht verfügbare Funktion, wie z. B. die automatische Hochlauffunktion des Fensters, aktivieren möchte. Da der Mikrorechner 1 die Kommunikation zwischen den an den Fahrzeugbus 7 angeschlossenen Komponenten der Fahrzeugelektronik mithört, ist er über den Zustand der Fenstersteuerung informiert und meldet dem Benutzer, dass die Hochlauffunktion des Fensters momentan nicht verfügbar ist. In der Regel kann das erfindungsgemäße System auch die Gründe hierfür angeben, beispielsweise dass die Fenstersteuerung nicht initialisiert ist, da die Fahrzeugbatterie abgeklemmt war. Das erfindungsgemäße System kann dem Fahrer nun die notwendigen Schritte angeben, um die Funktion wieder verfügbar zu machen, nämlich beispielsweise eine Anleitung zur Initialisierung der Fenstersteuerung geben.

Abschließend sei nochmals darauf hingewiesen, dass das erfindungsgemäße System automatisch erkennt, ob der Fahrzeugbenutzer Informationen zur Bedienung einzelner Fahrzeugkomponenten benötigt. Dies kann entweder durch Tastendruck oder Spracheingabe initiiert werden oder aber auch automatisch erfolgen aufgrund von Statusinformationen, die dem Mikrorechner der erfindungsgemäßen Vorrichtung zur Verfügung stehen. Da der Mikrorechner mit den Funktionen der Fahrzeugelektronik verknüpft ist, kann das erfindungsgemäße System erkennen, zu welchem Themenbereich der Benutzer Informationen benötigt. Die benötigten Funktions- und Bedieninformationen werden dann von der Informationsbasis des erfindungsgemäßen Systems und gegebenenfalls auch von einer externen Informationsbasis abgerufen und entweder visuell oder akustisch in Form von Warnsignalen oder Sprache wiedergegeben. Das Blättern in den in der Informationsbasis und/oder in der externen Informationsbasis abgelegten Informationen wird durch Inhaltsverzeichnisse und Verweise - Hyperlinks - erleichtert. Eine Volltextsuche, auch als Dialog mit dem Benutzer, kann ebenfalls integriert sein. Die Informationsbasis des erfindungsgemäßen Systems kann einfach gegebenenfalls auch automatisch aktualisiert werden. Schließlich können die in der Informationsbasis abgespeicherten Bedieninformationen auch mit einer persönlichen Beratung über eine Telefonhotline verknüpft werden.

## Patentansprüche

1. System zum Abrufen von Informationen zur Funktion und Bedienung verschiedener Einrichtungen eines Kraftfahrzeugs, wobei das Kraftfahrzeug mit mindestens einem Fahrzeugbus (7) ausgestattet ist, an den verschiedene Komponenten (8 bis 10) der Fahrzeugelektronik angeschlossen sind,
- mit einer Informationsbasis (2), in der Informationen zur Funktion und Bedienung verschiedener Einrichtungen des Kraftfahrzeugs abgespeichert sind,
- mit einem an die Informationsbasis (2) angeschlossenen Mikrorechner (1),
- mit Eingabemitteln (3, 4) zum Abrufen von Informationen von der Informationsbasis (2) und
- mit Ausgabemitteln (5, 6) zur Wiedergabe der abgerufenen Informationen,
wobei der Mikrorechner (1) an den Fahrzeugbus (7) angeschlossen ist und der Mikrorechner (1) so programmiert ist, dass der Informationsbedarf des Benutzers durch Auswertung der von den einzelnen Komponenten (8 bis 19) der Fahrzeugelektronik an den Fahrzeugbus (7) gelieferten Daten ermittelt wird und entsprechende Informationen automatisch von der an den Mikrorechner (1) angeschlossenen Informationsbasis (2) abgerufen und wiedergegeben werden,
**dadurch gekennzeichnet, dass** in der an den Mikrorechner (1) angeschlossenen Informationsbasis (2) zusammen mit einzelnen Informationen zur Funktion oder Bedienung einzelner Einrichtungen des Kraftfahrzeugs auch Verweise auf außerhalb der an den Mikrorechner (1) angeschlossenen Informationsbasis (2) verfügbare Informationen abgespeichert sind und dass der Mikrorechner (1) an eine externe Informationsbasis angekoppelt ist, zu der durch Abrufen eines entsprechenden Verweises von der an den Mikrorechner (1) angeschlossenen Informationsbasis (2) eine Verbindung hergestellt wird und zusätzliche Informationen zur Funktion oder Bedienung einzelner Einrichtungen des Kraftfahrzeugs abgerufen werden.

2. System nach Anspruch 1, **dadurch gekennzeichnet, dass** die Eingabemittel (3, 4) Mittel zum Aktivieren des Systems umfassen und insbesondere Mittel zum Aktivieren des Mikrorechners (1).

3. System nach einem der Ansprüche 1 oder 2, **dadurch gekennzeichnet, dass** die Eingabemittel eine Tastatur (3) umfassen.

4. System nach einem der Ansprüche 1 bis 3, **dadurch gekennzeichnet, dass** die Eingabemittel (4) ein Mikrofon und Mittel zur Sprachsignalauswertung umfassen.

5. System nach einem der Ansprüche 1 bis 4, **dadurch gekennzeichnet, dass** die Ausgabemittel (6) Mittel zur akustischen Wiedergabe der abgerufenen Informationen umfassen.

6. System nach einem der Ansprüche 1 bis 5, **dadurch gekennzeichnet, dass** die Ausgabemittel (5) Mittel zur visuellen, insbesondere textuellen oder grafischen, Wiedergabe der abgerufenen Informationen umfassen.

7. System nach einem der Ansprüche 1 bis 6, **dadurch gekennzeichnet, dass** in der an den Mikrorecher (1) angeschlossenen Informationsbasis (2) zusammen mit einzelnen Informationen zur Funktion oder Bedienung einzelner Einrichtungen des Kraftfahrzeugs auch Querverweise auf weitere in der an den Mikrorechner (1) angeschlossenen Informationsbasis (2) abgespeicherte Informationen abgespeichert sind, so dass derartig abgespeicherte Informationen auch interaktiv abrufbar sind.

8. System nach einem der Ansprüche 1 bis 7, **dadurch gekennzeichnet, dass** zwischen dem Mikrorechner (1) und der an den Mikrorechner (1) angeschlossenen Informationsbasis (2) eine dauerhafte Verbindung besteht.

9. System nach einem der Ansprüche 1 bis 7, **dadurch gekennzeichnet, dass** die Verbindung zwischen dem Mikrorechner (1) und der an den Mikrorechner (1) angeschlossenen Informationsbasis (2) bei Bedarf (2) bei Bedarf aufgebaut wird.

10. System nach einem der Ansprüche 1 bis 9, **dadurch gekennzeichnet, dass** die an den Mikrorechner (1) angeschlossene Informationsbasis (2) über einen Kommunikationskanal aktualisierbar ist.

11. System nach einem der vorhergehenden Ansprüche, **dadurch gekennzeichnet, dass** der Mikrorechner (1) so programmiert ist, dass insbesondere durch Abrufen eines entsprechenden Verweises von der an den Mikrorechner (1) angeschlossenen Informationsbasis (2) eine Verbindung zu einer Telefon-Hotline (11) herstellbar ist.

12. System nach Anspruch 11, **dadurch gekennzeichnet, dass** der Mikrorechner (1) so programmiert ist, dass fahrzeugspezifische Daten an die angewählte Telefon-Zentrale übermittelt werden.

13. System nach einem der vorhergehenden Ansprüche, wobei das Kraftfahrzeug mit einem Navigationssystem ausgestattet ist, **dadurch gekennzeichnet, dass** eine Kommunikation zwischen dem Mikrorechner und dem Navigationssystem vorgesehen ist, so dass neben Informationen zur Funktion oder Bedienung einzelner Einrichtungen des Kraftfahrzeugs auch Navigationsinformationen ausgegeben werden.

## Claims

1. System for retrieving information relating to the functioning and operator control of various devices of a motor vehicle, the motor vehicle being equipped with at least one vehicle bus (7) to which various components (8 to 10) of the vehicle's electronic system are connected,
- having an information base (2) in which information relating to the functioning and operator control of various devices of the motor vehicle is stored,
- having a microcomputer (1) which is connected to the information base (2),
- having input means (3, 4) for retrieving information from the information base (2), and
- having output means (5, 6) for reproducing the retrieved information,
the microcomputer (1) being connected to the vehicle bus (7) and the microcomputer (1) being programmed in such a way that the information requirement of the user is determined by evaluating the data supplied by the individual components (8 to 9) of the vehicle's electronic system to the vehicle bus (7), and corresponding information is retrieved automatically from the information base (2) which is connected to the microcomputer (1), and said information is reproduced, **characterized in that** references to information which is available outside the information base (2) which is connected to the microcomputer (1), are stored in the information base (2) which is connected to the microcomputer (1) together with individual information items relating to the functioning or operator control of individual devices of the motor vehicle, and **in that** the microcomputer (1) is coupled to an external information base to which a connection is set up by retrieving a corresponding reference from the information base (2) which is connected to the microcomputer (1), and additional information relating to the functioning or operator control of individual devices of the motor vehicle is retrieved.

2. System according to Claim 1, **characterized in that** the input means (3, 4) comprise means for activating the system, and in particular means for activating the microcomputer (1).

3. System according to one of Claims 1 or 2, **characterized in that** the input means comprise a keyboard (3).

4. System according to one of Claims 1 to 3, **characterized in that** the input means (4) comprise a microphone and means for evaluating speech signals.

5. System according to one of Claims 1 to 4, **characterized in that** the output means (6) comprise means for acoustically reproducing the retrieved information.

6. System according to one of Claims 1 to 5, **characterized in that** the output means (5) comprise means for reproducing the retrieved information in a visual, in particular textual or graphic, fashion.

7. System according to one of Claims 1 to 6, **characterized in that** cross-references to further information stored in the information base (2) which is connected to the microcomputer (1) is stored in the information base (2) which is connected to the microcomputer (1) together with individual information items relating to the functioning or operator control of individual devices of the motor vehicle, with the result that information which is stored in such a way can also be retrieved interactively.

8. System according to one of Claims 1 to 7, **characterized in that** there is a permanent connection between the microcomputer (1) and the information base (2) which is connected to the microcomputer (1).

9. System according to one of Claims 1 to 7, **characterized in that** the connection between the microcomputer (1) and the information base (2) which is connected to the microcomputer (1) is set up when necessary.

10. System according to one of Claims 1 to 9, **characterized in that** the information base (2) which is connected to the microcomputer (1) can be updated by means of a communications channel.

11. System according to one of the preceding claims, **characterized in that** the microcomputer (1) is programmed in such a way that a connection can be set up to a telephone hotline (11) in particular by retrieving a corresponding reference from the information base (2) which is connected to the microcomputer (1).

12. System according to Claim 11, **characterized in that** the microcomputer (1) is programmed in such a way that the vehicle-specific data is transmitted to the selected telephone exchange.

13. System according to one of the preceding claims, the motor vehicle being equipped with a navigation system, **characterized in that** communication is provided between the microcomputer and the navigation system so that, in addition to information relating to the functioning or operator control of individual devices of the motor vehicle, navigation information is also output.

## Revendications

1. Système de recherche d'informations pour le fonctionnement et le service de différentes installations d'un véhicule selon lequel le véhicule est équipé d'au moins un bus (7) auquel sont reliés différents composants (8-10) de l'électronique du véhicule, comprenant :
- une base d'informations (2) contenant en mémoire les informations de fonctionnement et de service de différentes installations du véhicule,
- un microcalculateur (1) relié à la base d'informations (2),
- des moyens d'entrée (3, 4) pour chercher des informations dans la base d'informations (2) et
- des moyens d'émission (5, 6) pour reproduire les informations demandées,
- le microcalculateur (1) relié au bus (7) du véhicule est programmé pour déterminer la demande d'information de l'utilisateur par l'exploitation des données fournies par les différents composants (8-19) de l'électronique du véhicule au bus (7) du véhicule et par l'appel automatique d'informations dans la base d'informations reliée (2) et leur reproduction,
**caractérisé en ce que**
dans la base d'informations raccordée (2) sont enregistrées en mémoire avec les informations de fonctionnement ou de service des différentes installations du véhicule également des indications concernant des informations disponibles en dehors de la base d'informations raccordée (2) et
le microcalculateur (1) est couplé sur une base d'informations externe vers laquelle, par l'appel d'une indication correspondante de la base d'informations (2), raccordée, il s'établit une liaison et un appel d'informations supplémentaires concernant les fonctions et services des différentes installations du véhicule.

2. Système selon la revendication 1,
**caractérisé en ce que**
les moyens d'entrée (3, 4) comportent des moyens pour activer le système et notamment des moyens pour activer le microcalculateur (1).

3. Système selon l'une des revendications 1 ou 2,
**caractérisé en ce que**
les moyens d'entrée comprennent un clavier (3).

4. Système selon l'une des revendications 1 à 3,
**caractérisé en ce que**
les moyens d'entrée (4) comprennent un micro et des moyens d'exploitation de signaux vocaux.

5. Système selon l'une des revendications 1 à 4,
**caractérisé en ce que**
les moyens d'émission (6) comprennent des moyens de reproduction acoustique des informations appelées.

6. Système selon l'une quelconque des revendications 1 à 5,
**caractérisé en ce que**
les moyens d'émission (5) comportent des moyens pour la reproduction visuelle, notamment textuelle ou graphique, des informations appelées.

7. Système selon l'une des revendications 1 à 6,
**caractérisé en ce que**
la base d'informations (2), raccordée au microcalculateur (1), comporte avec les différentes informations concernant les fonctions ou les services des différentes installations du véhicule, également des indications transversales vers d'autres informations enregistrées dans la base d'informations (2) raccordée au microcalculateur (1) de façon que de telles informations ainsi mémorisées puissent être appelées également de façon interactive.

8. Système selon l'une des revendications 1 à 7,
**caractérisé par**
une liaison permanente entre le microcalculateur (1) et la base d'informations (2) raccordée au microcalculateur (1).

9. Système selon l'une des revendications 1 à 7,
**caractérisé en ce que**
la liaison entre le microcalculateur (1) et la base d'informations (2) raccordée au microcalculateur (1) peut être établie à la demande.

10. Système selon l'une des revendications 1 à 9,
**caractérisé en ce que**
l'information de base (2) raccordée au microcalculateur (1) peut être actualisée par l'intermédiaire d'un canal de communication.

11. Système selon l'une quelconque des revendications précédentes,
**caractérisé en ce que**
le microcalculateur (1) est programmé pour que notamment par l'appel d'une indication correspondante à partir de la base d'informations (2) raccordée au microcalculateur (1), il s'établisse une liaison vers la ligne téléphonique prioritaire (11) (Hotline).

12. Système selon la revendication 11,
**caractérisé en ce que**
le microcalculateur (1) est programmé pour transmettre les données spécifiques au véhicule vers la centrale téléphonique sélectionnée.

13. Système selon l'une des revendications précédentes, selon lequel le véhicule est équipé d'un système de navigation,
**caractérisé en ce qu'**
il est prévu une communication entre le microcalculateur et le système de navigation de sorte qu'à côté des informations de fonction et de service, les différentes installations du véhicule émettent également des informations de navigation.
